Europäisches Patentamt

European Patent Office

Office européen des brevets

(11) Publication number: **0 116 438**
**B1**

# EUROPEAN PATENT SPECIFICATION

(45) Date of publication of patent specification: **29.04.87**

(51) Int. Cl.⁴: **G 06 F 15/347, G 06 F 7/548**

(21) Application number: **84300624.8**

(22) Date of filing: **01.02.84**

(54) Binary digital processor.

(30) Priority: **02.02.83 GB 8302840**

(43) Date of publication of application:
**22.08.84 Bulletin 84/34**

(45) Publication of the grant of the patent:
**29.04.87 Bulletin 87/18**

(84) Designated Contracting States:
**DE FR IT NL**

(56) References cited:
**US-A-3 927 312**

**PROCEEDINGS OF THE WESTERN JOINT
COMPUTER CONFERENCE, March 1959, pages
257-261. J. VOLDER: "The CORDIC computing
technique"**

(73) Proprietor: **MARCONI AVIONICS LIMITED
Airport Works
Rochester Kent ME1 2XX (GB)**

(72) Inventor: **Spreadbury, David John
25 Micklefield Way
Borehamwood Hertfordshire (GB)**

(74) Representative: **Keppler, William Patrick
Central Patent Department Wembley Office The
General Electric Company, p.l.c. Hirst Research
Centre East Lane
Wembley Middlesex HA9 7PP (GB)**

Courier Press, Leamington Spa, England.

## Description

The present invention relates to digital processing circuits for performing mathematical operations on vectors and other variables which may be expressed in the complex form $x+jy$, and to signal-processing arrangements utilising such circuits.

It is frequently necessary or convenient, when dealing with a vector of the form $x+jy$, to rotate it in the $xy$ plane by an angle $\phi$, and this operation may be performed by the transformation:

$$1)\ldots x+jy\ (x\cos\phi - y\sin\phi) + j(y\cos\phi + \sin\phi)$$ involving multiplication by $\sin\phi$ and $\cos\phi$. In computing terms, the accurate calculation of $\cos\phi$ and $\sin\phi$ is time-consuming and/or uneconomic in terms of memory.

US—A—3 927 312 (Dickinson) shows a vector rotator which performs a two-stage rotation, the first stage rotating through a multiple of $30°$, and the second stage rotating through one of a set of 12 predetermined angles, each rotation being performed by a network of shifters and adders. This device is fast, but inaccurate. Each stage introduces an error of about 1% and the final angle can be in error by as much as $\pm 1.8°$. This error can only be reduced by adding further stages of rotation, each of which requires more circuitry to be built on, making the device very complicated.

An object of the present invention is to provide a digital processing circuit which is capable of rapidly and accurately performing calculations involving complex variables.

Let the multiplier $\sin\phi$ be represented by a simple binary right shift:

$$\sin\phi = 2^{-m}$$

Then,

$$\cos^2\phi = 1 - \sin^2\phi$$
$$\cos\phi = (1 - 2^{-2m})^{1/2}$$
$$\approx 1 - 2^{-(2m+1)}$$

Thus in the transformation 1) above, if the functions $\cos\phi$ and $\sin\phi$ are replaced by the functions $c(m)$ and $s(m)$ where

$$c(m) = 1 - 2^{-(2m+1)} \qquad\qquad \ldots 2)$$

$$s(m) = 2^{-m} \qquad\qquad \ldots 3)$$

and m is chosen such that

$$\tan\phi(m) = \frac{2^{-m}}{1 - 2^{-(2m+1)}} \qquad\qquad \ldots 4)$$

then rotation of $x+jy$ by exactly the angle $\phi$ will be achieved. The modulus of $x+jy$ will be increased slightly by the approximation used for a in terms of m, thus:

$$(\cos^2\phi + \sin^2\phi)^{1/2} = [(1 - 2^{-(2m+1)})^2 + (2^{-m})^2]^{1/2}$$

$$\approx 1 + 2^{-(4m+3)}$$

giving a per-unit error $k(m)$ of

$$k(m) \approx 2^{-(4m+3)} \qquad\qquad \ldots 5)$$

Thus the transformation

$$x+jy \rightarrow (x.c(m) - y.s(m)) + j(y.c(m) + x.s(m)) \qquad\qquad \ldots 6)$$

is exactly equivalent to the transformation

$$x+jy \rightarrow (1+k(m)).\{(x\cos\phi(m) - y(\sin\phi(m))$$

$$+ j(y\cos\phi(m) + x\sin\phi(m))\} \qquad\qquad \ldots 7)$$

where $\phi(m)$ is defined by equation 4).

Having chosen an appropriate parameter m to give the desired angle $\phi$, $x.c(m)$ and $y.s(m)$ can be evaluated simply by shifting x and y $2m+1$ and m places right respectively in a binary shift register, and in the case of $x.c(m)$, adding x. Thus the transformation 6) may be accomplished in a binary digital circuit arrangement using adders, shift registers and a set of stored values of m corresponding to various values of $\phi$, no multiplication being necessary. Rotation by an angle $\phi$ which does not correspond closely to an integral value of m may be achieved by successive rotations by $\phi_1, \phi_2 \ldots \phi_N$ where

$$\sum_{n=1}^{N} \phi_n = \phi$$

and each of $\phi_1$, $\phi_2$...$\phi_N$ corresonds closely to an integral value of m.

Therefore, according to the present invention, a binary digital processor for calculating the new coordinates $x_1$ and $y_1$ of a vector given by orginal coordinates x and y and having been rotated by an angle $\phi$ in the x,y-plane by means of respective approximations to the operations of multiplication by sin $\phi$ and cos $\phi$ in the transformation equations $x_1 = x \cos \phi - y \sin \phi$, $y_1 = y \cos\phi + x \sin\phi$ comprises adding means and means for performing controlled binary shifts on said coordinate values x and y characterised in that means (C) are provided for generating an integer variable m and said adding means and means for performing controlled binary shifts are arranged to multiply said coordinates by respective functions S(m) and C(m) where $S(m) \equiv 2^{-m}$ and $C(m) \equiv 1 - 2^{-(2m+1)}$, m being chosen such that tan

$$\phi = \frac{S(m)}{C(m)}.$$

The processor may conveniently be incorporated in an integrated circuit.

Means (such as a look-up table stored in a memory) may be provided for supplying one or more values of m (which is necessarily an integer) to enable any desired angle of rotation to be achieved. In general this will involve the addition and subtraction of a plurality of smaller rotations, each of which corresponds exactly to one or other value of m. The number of rotations required will depend on the desired accuracy of the required total rotation.

The processor may incorporate selectors and additional adders to enable vectors to be added, subtracted rotated and multiplied.

Particular embodiments of the invention will now be described by way of example with reference to Figures 1 to 8 of the accompanying drawings, which:

Figure 1 is a schematic representation of a simple vector rotator accumulator in accordance with the invention;

Figure 2 is a table showing the angle of rotation as a function of m and the corresponding magnitude error k(m);

Figure 3 is a schematic representation of a more versatile digital processor which is suitable for use in a frequency analyser;

Figure 4 shows a microprogram for operating the processor of Figure 3;

Figure 5 shows an arrangement for evaluating a discrete Fourier transform (D.F.T);

Figure 6 is a high level program for operating the arrangement of Figure 5;

Figure 7 shows an arrangement for evaluating a complex D.F.T., and

Figure 8 is a high level program for operating the arrangement of Figure 7.

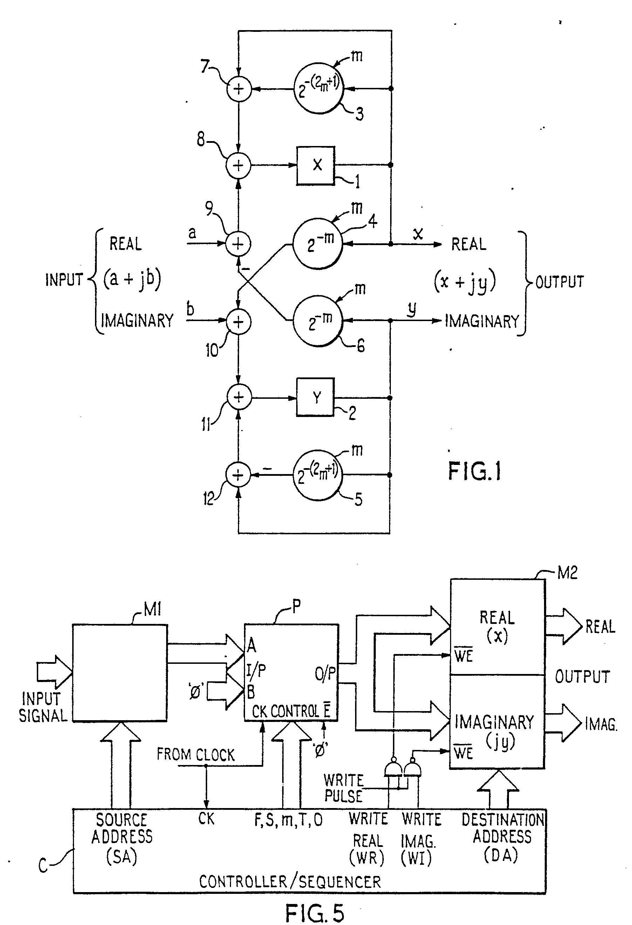

Referring to Figure 1, the simple processor shown comprises an upper half which handles the real component of a vector x+jy and a precisely similar lower half which stores the imaginary half of x+jy, (j being implied) the instantaneous values of x and y being stored in binary registers 1 and 2 respectively. Shifters 3 and 4, 5 and 6 are associated with registers 1 and 2 respectively and shift the binary representations of x and y by either m places (shifters 4 and 6) or (2m+1) places (shifters 3 and 5) in accordance with an input value of m. Input data in the form of a vector a+jb is added to the vector x+jy stored in the registers and the latter is rotated by an angle $\phi(m)$ in accordance with equation 4) each time the registers are clocked. Each resulting new value of x+jy is successively stored in registers 1 and 2. The operation of the processor is as follows:

When register 1 is clocked the stored value of x is applied to the positive input of adder 7 and the stored value of x shifted (2m+1) places to the right (i.e. $x.2^{-(2m+1)}$) is applied to the negative input of adder 7. The resulting output $x.(1-2^{-(2m+1)})$ (which is equal to x.c (m)) is added to the output of adder 9, fed to the output of the processor, and stored as the new value of x register 1. The output of adder 9 is $a - y.2^{-m}$ (i.e. a−y.s(m)) and hence the new value of x output from the processor and stored in register 1 is:

$$x.c(m) - y.s(m) + a$$

The operation of the other half of the processor is precisely similar so that the new value of y output from the processor and stored in register 2 is:

$$y.c(m) + x.s(m) + b$$

Thus each time the processor is clocked, inputting a, b and m, the stored vector x+jy is transformed to the vector:

$$(x.c(m) - y.s(m) + a) + j(y.c(m) + x.s(m) + b)$$

3

**0 116 438**

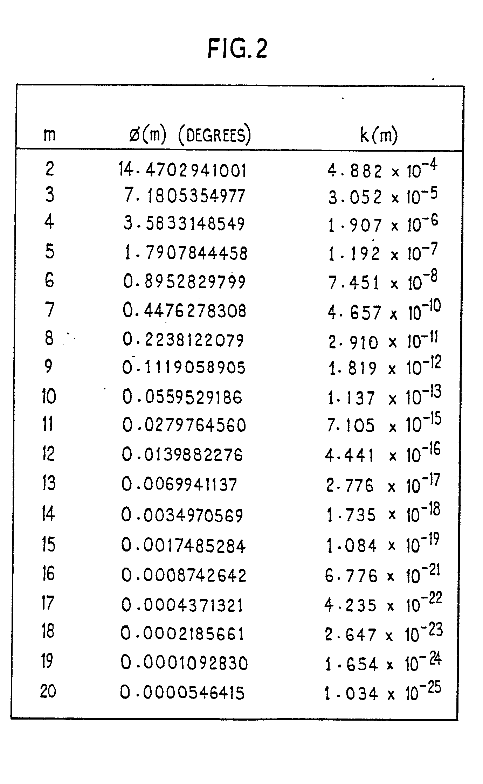

From equation 7) it can be seen that this transformation corresponds to rotation of $x+jy$ by $\phi$, multiplication of $x+jy$ by $I+k(m)$ (where $k(m)$ is given by equation 5) and addition of $a+jb$ to the rotated vector. It will be apparent that selectors may be inserted in series with the adders in Figure 1 to allow simple addition of $a+jb$ to $x+jy$ or simple rotation of $x+jy$. Figure 2 shows the values of m and $k(m)$ corresponding to values of $\phi$ (angle of rotation) up to 14°. It can be seen that $k(m)$ rapidly becomes negligible even at small values of m. A suitable program for choosing successive values of m to apply to the processor of Figure 1 so as to achieve a desired total rotation may readily be devised by a person skilled in the art and stored if necessary in a PROM (programmable read only memory). The total values of both $\phi(m)$ and $k(m)$ are equal to the respective sums of the individual $\phi$'S and k's. Since $\phi(m)$ halves with each increment in m, an accurate rotation may be achieved by using only a few successive values of m. It will be appreciated that rotations of 90, 180 and 270 degrees may be achieved exactly by signed transfer of data between registers. Rotation by zero degrees may be used for simple addition and to pad out compound rotation sequences to a fixed length. Reverse rotation may be achieved by changing the sign of the $s(m)$ coefficients and rotation to the first quadrant may be achieved by using sign changes on negative data only (thereby replacing $x+jy$ by $|x|+j|y|$). The modulus of a stored vector may be determined by providing means for registering a change in sign of y from positive to negative and for inhibiting further rotation, so that the vector is rotated onto the real axis in small steps. The x value is then equal to the modulus of the vector. The argument of the vector may be found by summing the rotations required to bring the vector on to the x-axis.

Gain control may be achieved by adding and/or subtracting appropriate fractions of the input $a+jb$ (achieved by binary shifts) a controlled number of times before rotating the vector—this facility is useful for example in "windowing" input waveform samples in Fourier Transform frequency analysis.

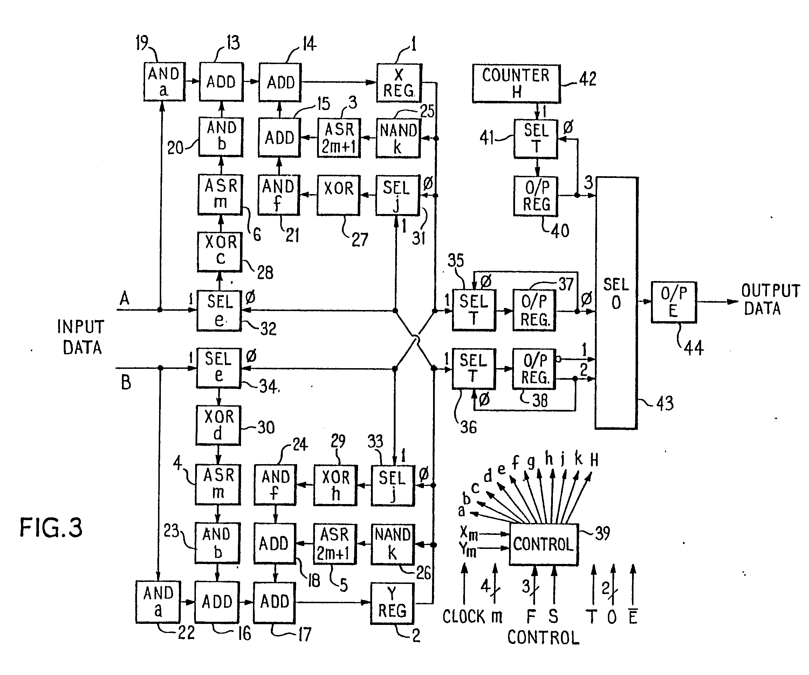

The extra functions described above may be achieved by simple modifications (generally involving the insertion of selectors in the input paths of the adders) to the processor of Figure 1. Some of these functions are incorporated in the more sophisticated processor of Figure 3, but will be apparent to one skilled in the art and will not therefore be described individually in detail.

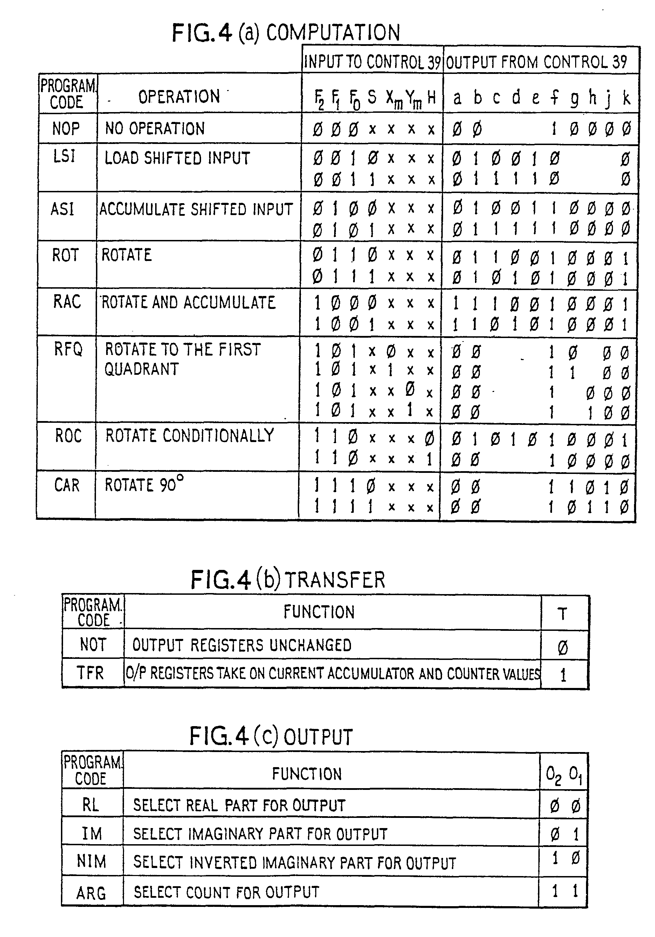

Figure 3 shows a process which is similar to that shown in Figure 1, but which is more versatile. The operation of the processor of Figure 3 will be described with reference to the operating program tabulated in Figure 4. The processor employs the "two is complement binary" format, in which the most significant bits Xm and Ym stored in the X and Y registers 1 and 2 represent $-2I$, where I is the value of the next most significant bit. Thus each register can store a binary number having a value between $\pm(2I-1)$ inclusive, $X_m$ and $Y_m$ having a value zero for positive numbers and unity for negative numbers. Typically the X and Y registers, adders, shifters and selectors (and the data buses between them) might have a capacity of 24 bits without undue complexity.

The processor of Figure 3 is controlled by a control section 39, which is in turn controlled by inputs $X_m$ and $Y_m$, (the most significant (sign) bits from the X and Y registers 1 and 2 respectively), a 3-bit binary code F corresponding to $F_2$, $F_1$, $F_0$ in the program listed in Figure 4(a) and a 1-bit sign code S listed in the same program. $S=0$ gives true input data or positive (counter-clockwise) rotation. $S=1$ gives negated input data or clockwise rotation. Control 39 generates 1-bit output codes a,b,c,d,e,f,g,h,j,k in response to the inputs $X_m$, $Y_m$, F and S and feeds them to the various adders and shifters referenced 3 to 34 in Figure 3. It will be appreciated that the upper and lower halves of this part of the processor handle the real input data (from input A) and imaginary input data (from input B) in precisely the same manner. Accordingly, each control code a,b,e,f,j,k is routed to two identical components as indicated, thus code a controls components 19 and 22, code b controls components 20 and 23 and so on. However XOR gates 27 and 30 are independently controlled by codes g,c,h and d respectively. An additional "halt" output H is fed to a counter 42, which counter counts small (known) rotations of the vector $x+jy$. Output H is generated by the sign bit $Y_m$ and has a value unity when $Y_m$ changes from zero to unity, corresponding to rotation of $x+jy$ clockwise past the x-axis. When H changes to unity, counter 42 is stopped, and thus registers the number of known small rotations (typically one degree) required to bring a vector $x+jy$ onto the x-axis, which corresponds to the argument of the vector.

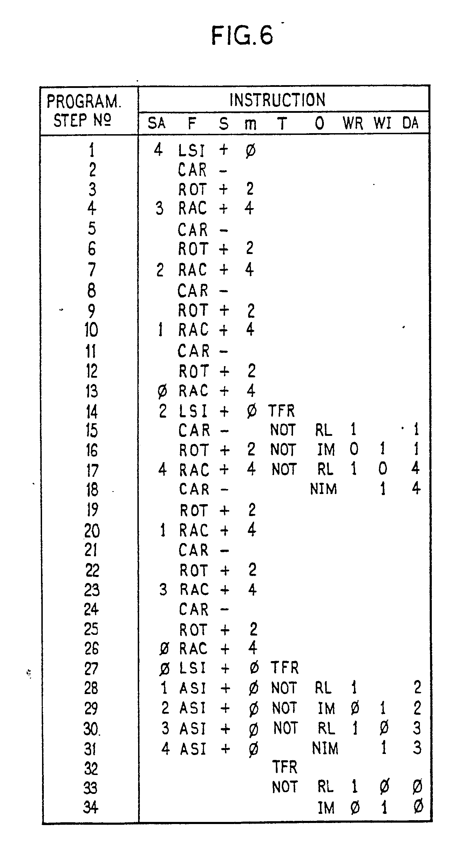

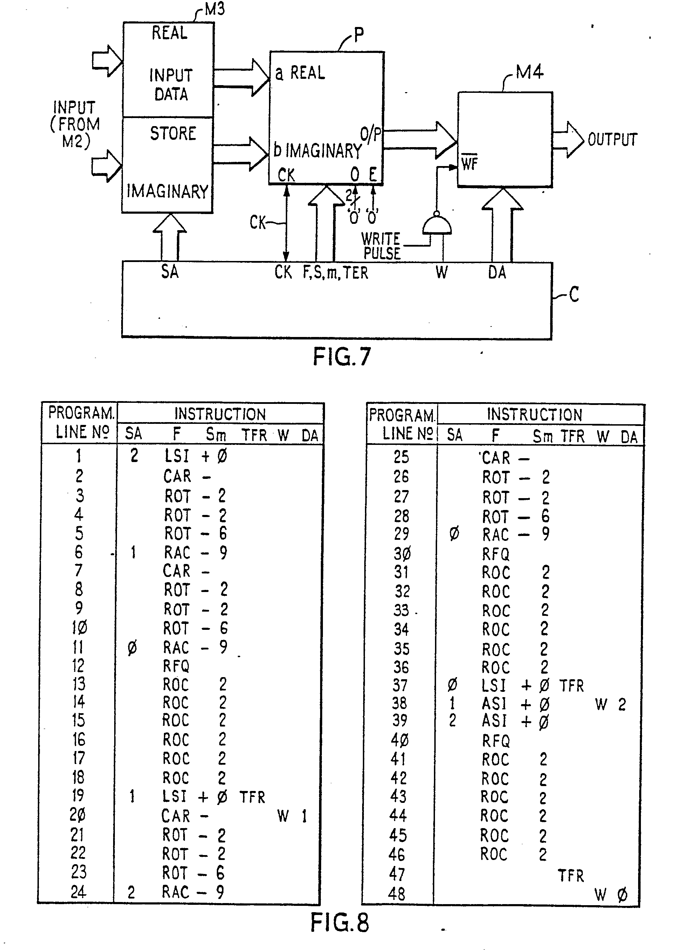

Additional control signals are fed directly to some or all of the components of the processor, namely a clock signal; a value of m in 4-bit code (to shift registers 3,4,5 and 6 only); a 1-bit transfer code T (to selectors 35,36 and 41), for either updating the output registers 37, 38 and 40 (T=1) or leaving them unchanged, (T=0); a 2-bit output enable code O to selector 43 for selecting one of inputs 0, 1, 2 or 3 and a 1-bit output enable code $\bar{E}$ to a common output buffer 44. The states of transfer code T and output enable code O are tabulated in Figure 4(b) and 4(c) and labelled with two-letter or three-letter program codes which appear in the higher-level programs of Figures 6 and 7. Codes RL, IM, NIM and ARG correspond to inputs 0, 2, 1 and 3 respectively of selector 43.

Inputs m, F,S,T,O and E, together with suitable write commands and source and destination addresses (not shown) are generated by a high level program (Figure 6) which is suitably stored in ROM (read only memory).

Figure 4(a) shows the eight operations (in program code NOP, LSI, ASI, ROT, RAC, RFQ, ROC and CAR) which the processor can perform on input data $A+jB$, in terms of the inputs to control 39 and the corresponding outputs generated by control 39. It will be appreciated that those operations which involve rotation will additionally be governed by the variable m, which determines the angle of rotation $\phi(m)$ in accordance with expression 4).

4

Before describing the operations tabulated in Figure 4(a) the hardware for implementing control of the processor shown in Figure 3 will be briefly described. Components 25 and 26 are NAND gates. Components 27,28,29 and 30 are XOR (exclusive OR) gates. Components 31,32,33 and 34 are selectors, which select inputs 1 or 0 according to the value of their binary control code j or e. Components 19,20,21,22,23,24 are AND gates and therefore behave as adders when their binary control codes are high (a,b,f=1). Components 13,14,15,16,17,18 are simple adders and components 1,2,3,4,5 and 6 are the same as the correspondingly referenced components in Figure 1.

Referring to Figure 4(a), the first operation listed is NOP (no operation) which simply leaves stored x+jy unchanged, irrespective of the input data. This is achieved by feeding the contents of the x and y registers back into their inputs. Accordingly a path for the stored x data is formed through selector 31, XOR gate 27, AND gate 21 and adders 14 and 15 by putting k=0 (blocking off gate 25, j=0 (to select input 0 of selector 31), g=0 (to open gate 27) and f=1 (to open gate 21). By setting h=0 a similar path is formed for the y register. The addition of A and B to x and y at adders 14 is prevented by setting a=0. These values are set out in the first row of the table of Figure 4(a). Outputs c,d and e are not specified. Since no operation is carried out, inputs S, $X_m$, $Y_m$ and H are immaterial; such "don't care" inputs are indicated by crosses. Operation LSI exists in two versions and replaces x+jy by either s(m)(A+jB) if the sign bit S=0 or −s(m) (A+jB) if S=1.

Similarly, operation ASI achieves the transformation:

$$x+jy \rightarrow x+jy \pm s(m)(A+jB)$$

according to whether S=0 (making a c=0 and d=0) or 1 (making c=1 and d=1).

Operation ROT achieves the rotation (in either direction):

$$x+jy \rightarrow x.c(m) \mp y.s(m) + j(y.c(m) \pm x.c(m))$$

according to whether S=0 or 1.

Operation RAC performs the combined rotation and addition:

$$x+jy \rightarrow (x.c(m) \mp y.s(m) + A) + j(y.c(m) \pm x.s(m) + B)$$

again according to whether S=0 or S=1.

Operation RFQ exists in four different versions according to the state of $X_m$ and $Y_m$ (i.e. according to the quadrant in which x+jy falls). This changes the signs of x and y only if they are respectively negative—thus the new x and y are always positive.

Operation ROC leaves x+jy unchanged if H=1 and rotates x+jy by $\phi(m)$ if H=0; i.e. when H=0,

$$x+jy \rightarrow (x.c(m) \mp y.s(m)) + j(y.c(m) \pm x.s(m)),$$

the direction of rotation depending on the value of S. If m is chosen to make $\phi$ small, the argument of x+jy can be found by adding the $\phi$'s in counter 42, as already described.

The operation CAR rotates x+jy by $\pm 90°$ according to the value of S.

Figure 5 shows a processor P as described above with reference to Figure 3, incorporated in an arrangement for evaluating the frequency components of an input waveform by means of a discrete Fourier transform (D.F.T.). Samples of the waveform are stored digitally in a memory M1, fed to the real input of processor P (the imaginary input being left unused or used for some other function), processed and output to a memory M2, which is divided in two for storing the real and imaginary parts respectively of the output vector x+jy. The arrangement is controlled by a controller/sequencer C, which is in turn fed with the program tabulated in Figure 6. The program of Figure 6 is written in terms of the operations set out in Figure 4 and also includes WR (write real) and WI (write imaginary) commands for entering output data from P into memory M2 together with the necessary source and destination addresses SA and DA.

The general expression for an N point (radix N) discrete Fourier transform is:

$$X_k = \sum_{n=0}^{N-1} x_n W_N^{nk} \qquad \ldots 8)$$

where

$$0 \leq k < N, \quad W_N^{nk} = e^{-j \cdot \frac{2\pi nk}{N}},$$

$x_n$ is the value of the nth (complex) waveform sample and $X_k$ is the amplitude of the kth frequency component. It has been shown by T. E. Curtis and J. E. Wickenden on pages 424 and 425 of I.E.E. Proceedings Vol. 130, Part F, Number 5 (August 1983) that expression 8.) may be re-written as:

$$X_k = \sum_{n=0}^{N-1} x_{nk^*(\text{mod } N)} \, W_N^{nQ} \qquad \ldots 9)$$

in the special case where N is a prime number;

$$W_N^{nQ} = e^{-\dfrac{j \cdot 2\pi n Q}{N}} \qquad \ldots 10)$$

where Q is any integer such that $Q \neq 0$ (mod N) and $k^*$ is defined by the expression $kk^*$ (mod N)=Q. The above mentioned article (which starts at p.423) is hereby incorporated by reference. It will be noted that a single value of $W_N^Q$ (which corresponds to a vector rotation in expression 9.)) may be chosen and used for all frequency components k (except k=0), different values of k using different input data sequences. Thus expression 9.) may be evaluated more easily than expression 8.), which requires a different rotation for each value of k.

The program of Figure 6 evaluates expression 9.) for a 5 point D.F.T. (N=5, k=1,2,3,4), which is equivalent to evaluating the matrix product:

$$
\begin{bmatrix} X_1 \\ X_2 \\ X_3 \\ X_4 \end{bmatrix}
=
\begin{bmatrix}
x_0 & x_1 & x_2 & x_3 & x_4 \\
x_0 & x_3 & x_1 & x_4 & x_2 \\
x_0 & x_2 & x_4 & x_1 & x_3 \\
x_0 & x_4 & x_3 & x_2 & x_1
\end{bmatrix}
\begin{bmatrix} W^0 \\ W^1 \\ W^2 \\ W^3 \\ W^4 \end{bmatrix}
\qquad \ldots 11)
$$

The matrix of $x_n$ above represents the $W^{nk(\text{mod } 5)}$'s in the sum. The $X_0$ terms (representing the D.C. signal component) are omitted.

From ..11)

$$X_1 = x_0 W^0 + x_1 W^1 + x_2 W^2 + x_3 W^3 + x_4 W^4$$

$$= (((x_4 W^1 + x_3) \, W^1 + x_2) \, W^1 + x_1) \, W^1 + x_0 \qquad \ldots 12)$$

and

$$X_2 = x_0 W^0 = x_3 W^1 = x_1 W^2 + x_4 W^3 + x_2 W^4$$

$$= (((x_2 W^1 + x_4) W^1 + x_1) W^1 + x_3) W^1 + x_0 \qquad \ldots 13)$$

$$W^n = e^{-\dfrac{j \cdot 2\pi n}{5}},$$

so that each successive $W^n$ is rotated by

$$\dfrac{-2\pi}{5} \simeq -72°.$$

This is achieved in Figure 6 by a rotation of 90° and then two reverse rotations of approximately 14° (m=2) and 4° (m=4) respectively. Expression 12.) is evaluated in lines 1 to 13 of the program (source addresses 4,3,2,1, and 0 corresponding to $x_4$, $x_3$, $x_2$, $x_1$ and $x_0$ respectively) and $X_1$ is output in lines 15 and 16. Because of the conjugate symmetry of the matrix of $x_n$ in expression 11.), $X_4$ can be immediately derived from $X_1$ and is output in lines 17 and 18 of the program. $X_2$ is calculated in lines 14 to 26 of the program and output at lines 28 and 29, enabling $X_3$ to be output at lines 30 and 31, and $X_0$ is calculated in lines 27 to 31 of the program and output at lines 33 and 34. Thus a set of complex harmonies $X_0$ to $X_4$ are output from memory M2. The arrangement of Figure 5, programmed as shown in Figure 6, may thus be used substantially as it stands to perform a frequency analysis on an input waveform. It will be appreciated that a D.F.T. having many more than 5 points will generally be used in practice. A program on the lines set out in Figure 6, but with a proportionally greater number of steps, may be derived without difficulty for a D.F.T. having a large, prime number of points. Furthermore it will be appreciated that the process of Figure 3 is generally applicable to the calculation of D.F.T.'S, and not just the special form of prime radix D.F.T. of expression 9). Thus the general D.F.T. of expression 8) may be written recursively

$$X_k=(\ldots(x_{N-1} . W_N^k+x_{N-2}) . W_N^k+\ldots x_1) . W_N^k+X_0. \qquad \ldots 14)$$

and computed by the processor of Figure 3 by summing the data samples in reverse order with a repeating compound rotation $W_N^k$. However the prime radix D.F.T. 9.) may be computed more efficiently and in particular a D.F.T. decomposed into a plurality of (particularly 2) prime radix D.F.T.'S such as 9.) may be computed highly efficiently by a processor in accordance with the invention.

On page 424 of the Curtis and Wickenden paper referred to above, it is shown that a radix $N_1 N_2$ D.F.T. can be efficiently evaluated by performing $N_1$ radix $N_2$ D.F.T.'S and performing $N_2$ radix $N_1$ D.F.T.'S on the result, if $N_1$ and $N_2$ are relatively prime (i.e. the highest common factor=1). This condition is of course fulfilled in both $N_1$ and $N_2$ are themselves prime numbers, and accordingly Figure 7 shows an arrangement for processing the complex output $X_0$ to $X_4$ of the processor arrangement of Figure 5 to successively calculate five radix 3 D.F.T.'S of the type shown in expression 9.). Thus the arrangement of Figure 7 is precisely similar to that of Figure 5 except that it handles complex input data, which is fed to a divided input memory M3. The input data is fed to the real and imaginary inputs of a processor P of the type shown in Figure 3 and the resulting output is fed to an output data store M4, where the modulus is extracted and output as a set of 15 frequency components. The arrangement is controlled by a controller/sequencer C, which is in turn controlled by the program of Figure 8. This program is similar to that of Figure 6, except that rotations of $-120°$ (approximately) are used. The three computed output values are output at lines 20, 38 and 48 respectively.

**Claims**

1. A binary digital processor for calculating the new coordinates $x_1$ and $y_1$ of a vector given by original coordinates x and y and having been rotated by an angle $\phi$ in the x,y-plane by means of respective approximations to the operations of multiplication by $\sin \phi$ and $\cos \phi$, in the transformation equations $x_1=x \cos\phi-y\sin \phi$, $y_1=y \cos\phi+x \sin\phi$ said processor comprising adding means (7—12) and means (3—6) for performing controlled binary shifts on said coordinate values x and y, characterised in that means (C) are provided for generating an integer variable m and said adding means (7—12) and means (3—6) for performing controlled binary shifts are arranged to multiply said coordinates by respective functions S(m) and C(m) where $S(m)\equiv 2^{-m}$ and $C(m)\equiv 1-2^{-(2m+1)}$ m being chosen such that

$$\tan \phi=\frac{S(m)}{C(m)}.$$

2. A binary digital processor as claimed in Claim 1, arranged to successively rotate said vector by repeatedly performing said controlled binary shifts, the angle $\phi$ of each rotation being a variable such that

$$\tan \Omega=\frac{S(m)}{C(m)}.$$

3. A binary digital processor as claimed in Claim 1 or Claim 2, comprising similar x and y sections arranged to process real x and imaginary jy components respectively of said vector; each of said sections comprising a register (1,2) for storing the value of said real or imaginary component, a first binary shifter (4,6) coupled to the output of said register for multiplying said value by the function S(m) and an adder (7,12) having positive and negative inputs, one of said inputs being coupled to the output of said register and the other of said inputs being coupled via a second binary shifter (3,5) to the output of said register, such that said value is multiplied by the function C(m) at the output of said adder (7,12); wherein the outputs of said adders (7,12) are added to or subtracted from the outputs of the complementary first binary shifters (4,6) so as to generate new $x_1$ and $jy_1$ components of a rotated version of the original vector x+jy.

4. A binary digital processor as claimed in Claim 3, further comprising means (8,11) for feeding said new $x_1$ and $jy_1$ components into the respective inputs of said registers (1,2) and additionally comprising further adding means (9,10) connected to said respective register inputs for adding or subtracting independent input variables (a+jb) from said new $x_1+jy_1$ components.

5. A binary digital processor as claimed in Claim 4, further comprising controlled gating means (19—34) for controlling the vector rotation and the addition or subtraction of said input variables (a+jb).

6. A binary digital processor as claimed in Claim 5, further comprising a stored operating program (Fig. 4a) for controlling said gating means (19—34).

7. A binary digital processor as claimed in Claim 5 or Claim 6, arranged to conditionally rotate a vector stored in said registers (1,2) according to the sign of its x and/or jy components.

8. A binary digital processor as claimed in any of Claims 2 to 7, further comprising counting means (42) arranged to measure the angle of rotation ($\phi$) of a stored vector.

9. A binary digital processor as claimed in any preceding Claim, arranged to evaluate the exponential terms $(W_N^{nk})$ of a discrete Fourier transform by successive vector rotations.

10. A binary digital processor as claimed in any preceding Claim, arranged to compute the radix N discrete Fourier transform:

$$X_k = \sum_{n=0}^{N-1} x_{nk^*(mod\ N)} \exp\left(-j \cdot \frac{2\pi n Q}{N}\right).$$

where N is a prime number, Q is any integer such that $Q \neq 0$ (mod (N) and $k^*$ is defined by the expression $kk^*$ (mod N) = Q.

11. A binary digital processor as claimed in Claim 10 wherein Q=1.

12. An arrangement comprising one or more binary digital processors as claimed in Claim 10 or Claim 11, arranged to compute a radix $N_1$ $N_2$ discrete Fourier transform by decomposition into two Fourier transforms of radix $N_1$, and $N_2$ respectively, $N_1$ and $N_2$ both being prime numbers.

13. A spectrum analyser incorporating a binary digital processor as claimed in Claim 10 or Claim 11, or incorporating an arrangement as claimed in Ciaim 12.

**Patentansprüche**

1. Binärer digitaler Prozessor zum Beechnen der neuen Koordinaten $x_1$ und $y_1$ eines Vektors, der durch ursprüngliche Koordinaten x und y gegeben ist und um einen Winkel $\phi$ in der x,y-Ebene gedreht worden ist, und zwar jeweils mittels Annäherungen an die Operationen einer Multiplikation mit $\sin\phi$ und $\cos\phi$ in den Transformationsgleichungen $x_1 = x \cos\phi - y \sin\phi$, $y_1 = y \cos\phi + x \sin\phi$, wobei der Prozessor Addiermittel (7—12) und Mittel (3—6) zur Durchführung gesteuerter Binärverschiebungen mit den erwähnten Koordinatenwerten x und y aufweist, dadurch gekennzeichnet, daß Mittel (C) zum Erzeugen einer ungeradzahligen Variablen m vorgesehen sind und daß die erwähnten Addiermittel (7—12) und Mittel (3—6) zur Durchführung gesteuerter Binärverschiebungen so ausgebildet sind, daß sie die erwähnten Koordinaten jeweils mit Funktionen S(m) und C(m) multiplizieren, wobei $S(m) \equiv 2^{-m}$ und $C(m) \equiv 1 - 2^{-(2m+1)}$ ist und m so gewählt ist, daß

$$\tan\phi = \frac{S(m)}{C(m)}$$

ist.

2. Binärer digitaler Prozessor nach Anspruch 1, der so ausgebildet ist, daß er den erwähnten Vektor sukzessiv durch wiederholte Ausführung der erwähnten gesteuerten Binärverschiebungen dreht, wobei der Winkel $\phi$ jeder Drehung eine solche Variable ist, daß gilt

$$\tan\phi = \frac{S(m)}{C(m)}.$$

3. Binärer digitaler Prozessor nach Anspruch 1 oder Anspruch 2 mit ähnlichen x- und y-Abschnitten, die so ausgebildet sind, daß sie jeweils reale Komponenten x und imaginäre Komponenten jy des erwähnten Vektors verarbeiten; daß jeder der erwähnten Abschnitte ein Register (1, 2) zum Speichern des Wertes der erwähnten realen oder imaginären Komponente, einen ersten Binärverschieber (4,6), der am Ausgang des erwähnten Registers zum Multiplizieren des erwähnten Wertes mit der Funktion S(m) angeschlossen ist, und einen Addierer (7, 12) mit positiven und negativen Eingängen aufweist, wobei der eine der erwähnten Eingänge am Ausgang des erwahnten Registers und der andere der erwähnten Eingänge über einen zweiten Binärverschieber (3,5) am Ausgang des erwähnten Registers angeschlossen ist, so daß der erwähnte Wert am Ausgang des erwähnten Addierers (7, 12) mit der Funktion C(m) multipliziert ist; wobei die Ausgangsgrößen der erwähnten Addierer (7, 12) zu den Ausgangsgrößen der komplementären ersten Binärverschieber (4,6) addiert oder von diesen substrahiert werden, so daß neue Komponenten $x_1$ und $jy_1$ einer gedrehten Version des ursprünglichen Vektors x+jy erzeugt werden.

4. Binärer digitaler Prozessor nach Anspruch 3, der ferner Mittel (8, 11) zum Eingeben der erwähnten neuen Komponenten $x_1$ und $jy_1$ in die jeweiligen Eingänge der erwähnten Register (1,2) und zusätzlich weitere Addiermittel (9, 10), die mit den jeweiligen erwähnten Registereingängen verbunden sind, um unabhängige Eingangsvariable (a+jb) zu den neuen Komponenten $x_1 + jy_1$ zu addieren oder von diesen zu subtrahieren, aufweist.

5. Binärer digitaler Prozessor nach Anspruch 4, der ferner gesteuerte Tormittel (19—34) zum Steuern der Vektordrehung und der Addition oder Subtraktion der erwähnten Eingangsvariablen (a+jb) aufweist.

6. Binärer digitaler Prozessor nach Anspruch 5, der ferner ein gespeichertes Betriebsprogramm (Fig. 4a) zum Steuern der erwähnten Tormittel (19—34) aufweist.

7. Binärer digitaler Prozessor nach Ansruch 5 oder Anspruch 6, der so ausgebildet ist, daß er einen in dem erwähnten Register (1, 2) gespeicherten Vektor in Übereinstimmung mit dem Vorzeichen seiner Komponenten x und/oder jy bedingt dreht.

8. Binärer digitaler Prozessor nach einem der Ansprüche 2 bis 7, der ferner Zählmittel (42) aufweist, die so ausgebildet sind, daß sie den Drehwinkel ($\phi$) eines gespeicherten Vektors messen.

9. Binärer digitaler Prozessor nach einem der vorstehenden Ansprüche, der so ausgebildet ist, daß er die Exponentialglieder ($W_N^{nk}$) einer diskreten Fourier-Transformierten durch sukzessive Vektordrehungen auswertet.

10. Binärer digitaler Prozessor nach einem der vorhergenden Ansprüche, der so ausgebildet ist, daß er die diskrete Fourier-Transformierte der Basis N berechnet:

$$X_k = \sum_{n=0}^{N-1} x_{nk*(\text{mod } N)} \exp\left(-j \cdot \frac{2\pi n Q}{N}\right).$$

wobei N eine Primzahl und Q eine ganze Zahl ist, für die gilt, daß $Q \neq 0$ (mod N), und k* durch den Ausdruck kk* (mod N)=Q definiert ist.

11. Binärer digitaler Prozessor nach Anspruch 10, wobei Q=1 ist.

12. Anordnung mit einem oder mehreren binären digitalen Prozessoren nach Anspruch 10 oder Anspruch 11, die so ausgebildet ist, daß sie die diskrete Fourier-Transformierte mit der Basis $N_1 N_2$ durch Zerlegung in zwei Fourier-Transformierte der Basis $N_1$ bzw. $N_2$ berechnet, wobei $N_1$ und $N_2$ beides Primzahlen sind.

13. Spektrumanalysator mit einem binären digitalen Prozessor nach Anspruch 10 oder Anspruch 11 oder mit einer Anordnung nach Anspruch 12.

**Revendications**

1. Processeur numérique binaire de calcul de nouvelles coordonnées $x_1$ et $y_1$ d'un vecteur donné par des coordonnées d'origine x et y et ayant tourné d'un angle $\phi$ dans le plan xy, à l'aide d'approximations respectives des opérations de multiplication par sin $\phi$ et cos $\phi$ dans les équations de transformation $x_1 = x \cos \phi - y \sin \phi$, $y_1 = y \cos \phi + x \sin \phi$, le processeur comprenant un dispositif d'addition (7—12) et un dispositif (3—6) destiné à assurer des décalages binaires réglés sur les valeurs des coordonnées x et y, caractérisé en ce qu'un dispositif (C) est destiné à créer une variable entière m et le dispositif d'addition (7—12) et le dispositif (3—6) d'exécution de décalage binaire réglé sont réalisés de manière qu'ils multiplient les coordonnées par les fonctions respectives S(m) et C(m) telles que $S(m) \equiv 2^{-m}$ et $C(m) \equiv 1 - 2^{-(2m+1)}$, m étant choisi de manière que tg

$$\phi = \frac{S(m)}{C(m)}.$$

2. Processeur numérique selon la revendication 1, réalisé de manière qu'il fasse tourner successivement le vecteur par exécution répétée des décalages binaires réglés, l'angle $\phi$ de chaque rotation étant une variable telle que tg

$$\phi = \frac{S(m)}{C(m)}.$$

3. Processeur numérique selon l'une des revendications 1 et 2, comprenant des sections x et y semblables destinées à traiter les composantes réelle x et imaginaire jy respectivement du vecteur, chacune des sections comprenant un registre (1, 2) destiné à conserver la valeur de la composante réelle ou imaginaire, un premier circuit de décalage binaire (4, 6) couplé à la sortie du registre et destiné à multiplier la valeur par la fonction S(m) et un additionneur (7, 12) ayant des signaux positif et négatif d'entrée, l'un des signaux d'entrée étant couplé à la sortie du registre et l'autre des signaux d'entrée étant couplé par l'intermédiaire d'un second circuit de décalage binaire (3, 5) à la sortie du registre, si bien que cette valeur est multipliée par la fonction C(m) à la sortie de l'additionner (7, 12), les signaux de sortie des additionneurs (7, 12) étant ajoutés aux signaux de sortie des premiers circuits de décalage binaire complémentaires (4, 6) ou soustraits de ces signaux de sortie afin que de nouvelles composantes $x_1$ et $jy_1$ d'une version du vecteur original x+jy qui a tourné soient créés.

4. Processeur numérique selon la revendication 3, comprenant en outre un dispositif (8, 11) destiné à transmettre les nouvelles composantes $x_1$ et $jy_1$ aux entrées respectives des registres (1, 2) et comprenant en outre un autre dispositif d'addition (9, 10) connecté aux entrées des registres respectifs et destiné à ajouter des variables indépendantes d'entrée (a+jb) aux nouvelles composantes $x_1 + jy_1$ ou à soustraire ces variables de ces composantes.

5. Processeur numérique selon la revendication 4, comprenant en outre un dispositif porte commandé (19—34) destiné à commander la rotation du vecteur et l'addition ou la soustraction desdites variables d'entrée (a+jb).

9

6. Processeur numérique selon la revendication 5, comprenant en outre un programme mémorisé d'exploitation (figure 4a) destiné à commander le dispositif porte (19—34).

7. Processeur numérique selon l'une des revendications 5 et 6, réalisé afin qu'il fasse tourner conditionnellement un vecteur mémorisé dans les registres (1,2) en fonction du signe de ses composantes x et/ou jy.

8. Processeur numérique selon l'une quelconque des revendications 2 à 7, comprenant en outre un dispositif de comptage (2) desinté à mesurer l'angle de rotation ($\phi$) d'un vecteur mémorisé.

9. Processeur numérique selon l'une quelconque des revendications précédentes, réalisé de manière qu'il évalue les termes exponentiels ($W_N^{nk}$) d'une transformée discrète de Fourier par des rotations vectorielles successives.

10. Processeur numérique selon l'une quelconque des revendications précédentes, réalisé de manière qu'il calcule la transformée discrèe de Fourier de racine N:

$$X_k = \sum_{n=0}^{N-1} x_{nk*(\text{mod } N)} \exp\left(-j \cdot \frac{2\pi nQ}{N}\right)$$

dans laquelle N est un nombre premier, Q est un entier tel que Q≠0 (modulo N) et k* est défini par l'expression kk* (mod N)=Q.

11. Processeur numérique selon la revendication 10, dans lequel Q=1.

12. Arrangement comprenant un ou plusieurs processeurs numériques selon l'une des revendications 10 et 11, destinés à calculer une transforméee discrète de Fourier de racine $N_1N_2$ par décomposition en deux transformations de Fourier de racines $N_1$ et $N_2$ respectivement, $N_1$ et $N_2$ étant tous deux des nombres premiers.

13. Analyseur de spectre comprenant un processeur numérique selon l'une des revendications 10 et 11 ou comprenant un arrangement selon la revendication 12.

FIG.1

FIG. 5

## FIG.2

| m | ∅(m) (DEGREES) | k(m) |
|---|---|---|
| 2 | 14.4702941001 | $4.882 \times 10^{-4}$ |
| 3 | 7.1805354977 | $3.052 \times 10^{-5}$ |
| 4 | 3.5833148549 | $1.907 \times 10^{-6}$ |
| 5 | 1.7907844458 | $1.192 \times 10^{-7}$ |
| 6 | 0.8952829799 | $7.451 \times 10^{-8}$ |
| 7 | 0.4476278308 | $4.657 \times 10^{-10}$ |
| 8 | 0.2238122079 | $2.910 \times 10^{-11}$ |
| 9 | 0.1119058905 | $1.819 \times 10^{-12}$ |
| 10 | 0.0559529186 | $1.137 \times 10^{-13}$ |
| 11 | 0.0279764560 | $7.105 \times 10^{-15}$ |
| 12 | 0.0139882276 | $4.441 \times 10^{-16}$ |
| 13 | 0.0069941137 | $2.776 \times 10^{-17}$ |
| 14 | 0.0034970569 | $1.735 \times 10^{-18}$ |
| 15 | 0.0017485284 | $1.084 \times 10^{-19}$ |
| 16 | 0.0008742642 | $6.776 \times 10^{-21}$ |
| 17 | 0.0004371321 | $4.235 \times 10^{-22}$ |
| 18 | 0.0002185661 | $2.647 \times 10^{-23}$ |
| 19 | 0.0001092830 | $1.654 \times 10^{-24}$ |
| 20 | 0.0000546415 | $1.034 \times 10^{-25}$ |

FIG.3

0 116 438

## FIG. 4 (a) COMPUTATION

| PROGRAM CODE | OPERATION | INPUT TO CONTROL 39 | | | | | | | OUTPUT FROM CONTROL 39 | | | | | | | | | |
|---|---|---|---|---|---|---|---|---|---|---|---|---|---|---|---|---|---|---|
| | | $F_2$ | $F_1$ | $F_0$ | S | $X_m$ | $Y_m$ | H | a | b | c | d | e | f | g | h | j | k |
| NOP | NO OPERATION | Ø | Ø | Ø | x | x | x | x | Ø | Ø | | | | 1 | Ø | Ø | Ø | Ø |
| LSI | LOAD SHIFTED INPUT | Ø | Ø | 1 | Ø | x | x | x | Ø | 1 | Ø | Ø | 1 | Ø | | | | Ø |
| | | Ø | Ø | 1 | 1 | x | x | x | Ø | 1 | 1 | 1 | 1 | Ø | | | | Ø |
| ASI | ACCUMULATE SHIFTED INPUT | Ø | 1 | Ø | Ø | x | x | x | Ø | 1 | Ø | Ø | 1 | 1 | Ø | Ø | Ø | Ø |
| | | Ø | 1 | Ø | 1 | x | x | x | Ø | 1 | 1 | 1 | 1 | 1 | Ø | Ø | Ø | Ø |
| ROT | ROTATE | Ø | 1 | 1 | Ø | x | x | x | Ø | 1 | 1 | Ø | Ø | 1 | Ø | Ø | Ø | 1 |
| | | Ø | 1 | 1 | 1 | x | x | x | Ø | 1 | Ø | 1 | Ø | 1 | Ø | Ø | Ø | 1 |
| RAC | ROTATE AND ACCUMULATE | 1 | Ø | Ø | Ø | x | x | x | 1 | 1 | 1 | Ø | Ø | 1 | Ø | Ø | Ø | 1 |
| | | 1 | Ø | Ø | 1 | x | x | x | 1 | 1 | Ø | 1 | Ø | 1 | Ø | Ø | Ø | 1 |
| RFQ | ROTATE TO THE FIRST QUADRANT | 1 | Ø | 1 | x | Ø | x | x | Ø | Ø | | | | 1 | Ø | | Ø | Ø |
| | | 1 | Ø | 1 | x | 1 | x | x | Ø | Ø | | | | 1 | 1 | | Ø | Ø |
| | | 1 | Ø | 1 | x | x | Ø | x | Ø | Ø | | | | 1 | | Ø | Ø | Ø |
| | | 1 | Ø | 1 | x | x | 1 | x | Ø | Ø | | | | 1 | | 1 | Ø | Ø |
| ROC | ROTATE CONDITIONALLY | 1 | 1 | Ø | x | x | x | Ø | Ø | 1 | Ø | 1 | Ø | 1 | Ø | Ø | Ø | 1 |
| | | 1 | 1 | Ø | x | x | x | 1 | Ø | Ø | | | | 1 | Ø | Ø | Ø | Ø |
| CAR | ROTATE 90° | 1 | 1 | 1 | Ø | x | x | x | Ø | Ø | | | | 1 | 1 | Ø | 1 | Ø |
| | | 1 | 1 | 1 | 1 | x | x | x | Ø | Ø | | | | 1 | Ø | 1 | 1 | Ø |

## FIG. 4 (b) TRANSFER

| PROGRAM CODE | FUNCTION | T |
|---|---|---|
| NOT | OUTPUT REGISTERS UNCHANGED | Ø |
| TFR | O/P REGISTERS TAKE ON CURRENT ACCUMULATOR AND COUNTER VALUES | 1 |

## FIG. 4 (c) OUTPUT

| PROGRAM CODE | FUNCTION | $O_2$ | $O_1$ |
|---|---|---|---|
| RL | SELECT REAL PART FOR OUTPUT | Ø | Ø |
| IM | SELECT IMAGINARY PART FOR OUTPUT | Ø | 1 |
| NIM | SELECT INVERTED IMAGINARY PART FOR OUTPUT | 1 | Ø |
| ARG | SELECT COUNT FOR OUTPUT | 1 | 1 |

4

# FIG.6

| PROGRAM. STEP Nº | INSTRUCTION | | | | | | | | |
|---|---|---|---|---|---|---|---|---|---|
| | SA | F | S | m | T | O | WR | WI | DA |
| 1 | 4 | LSI | + | Ø | | | | | |
| 2 | | CAR | – | | | | | | |
| 3 | | ROT | + | 2 | | | | | |
| 4 | 3 | RAC | + | 4 | | | | | |
| 5 | | CAR | – | | | | | | |
| 6 | | ROT | + | 2 | | | | | |
| 7 | 2 | RAC | + | 4 | | | | | |
| 8 | | CAR | – | | | | | | |
| 9 | | ROT | + | 2 | | | | | |
| 10 | 1 | RAC | + | 4 | | | | | |
| 11 | | CAR | – | | | | | | |
| 12 | | ROT | + | 2 | | | | | |
| 13 | Ø | RAC | + | 4 | | | | | |
| 14 | 2 | LSI | + | Ø | TFR | | | | |
| 15 | | CAR | – | | NOT | RL | 1 | | 1 |
| 16 | | ROT | + | 2 | NOT | IM | 0 | 1 | 1 |
| 17 | 4 | RAC | + | 4 | NOT | RL | 1 | 0 | 4 |
| 18 | | CAR | – | | | NIM | | 1 | 4 |
| 19 | | ROT | + | 2 | | | | | |
| 20 | 1 | RAC | + | 4 | | | | | |
| 21 | | CAR | – | | | | | | |
| 22 | | ROT | + | 2 | | | | | |
| 23 | 3 | RAC | + | 4 | | | | | |
| 24 | | CAR | – | | | | | | |
| 25 | | ROT | + | 2 | | | | | |
| 26 | Ø | RAC | + | 4 | | | | | |
| 27 | Ø | LSI | + | Ø | TFR | | | | |
| 28 | 1 | ASI | + | Ø | NOT | RL | 1 | | 2 |
| 29 | 2 | ASI | + | Ø | NOT | IM | Ø | 1 | 2 |
| 30. | 3 | ASI | + | Ø | NOT | RL | 1 | Ø | 3 |
| 31 | 4 | ASI | + | Ø | | NIM | | 1 | 3 |
| 32 | | | | | TFR | | | | |
| 33 | | | | | NOT | RL | 1 | Ø | Ø |
| 34 | | | | | | IM | Ø | 1 | Ø |

FIG.7

| PROGRAM. LINE Nº | INSTRUCTION | | | | | |
|---|---|---|---|---|---|---|
| | SA | F | Sm | TFR | W | DA |
| 1 | 2 | LSI | + Ø | | | |
| 2 | | CAR | – | | | |
| 3 | | ROT | – 2 | | | |
| 4 | | ROT | – 2 | | | |
| 5 | | ROT | – 6 | | | |
| 6 | 1 | RAC | – 9 | | | |
| 7 | | CAR | – | | | |
| 8 | | ROT | – 2 | | | |
| 9 | | ROT | – 2 | | | |
| 1Ø | | ROT | – 6 | | | |
| 11 | Ø | RAC | – 9 | | | |
| 12 | | RFQ | | | | |
| 13 | | ROC | 2 | | | |
| 14 | | ROC | 2 | | | |
| 15 | | ROC | 2 | | | |
| 16 | | ROC | 2 | | | |
| 17 | | ROC | 2 | | | |
| 18 | | ROC | 2 | | | |
| 19 | 1 | LSI | + Ø | TFR | | |
| 2Ø | | CAR | – | | W | 1 |
| 21 | | ROT | – 2 | | | |
| 22 | | ROT | – 2 | | | |
| 23 | | ROT | – 6 | | | |
| 24 | 2 | RAC | – 9 | | | |

| PROGRAM. LINE Nº | INSTRUCTION | | | | | |
|---|---|---|---|---|---|---|
| | SA | F | Sm | TFR | W | DA |
| 25 | | CAR | – | | | |
| 26 | | ROT | – 2 | | | |
| 27 | | ROT | – 2 | | | |
| 28 | | ROT | – 6 | | | |
| 29 | Ø | RAC | – 9 | | | |
| 3Ø | | RFQ | | | | |
| 31 | | ROC | 2 | | | |
| 32 | | ROC | 2 | | | |
| 33 | | ROC | 2 | | | |
| 34 | | ROC | 2 | | | |
| 35 | | ROC | 2 | | | |
| 36 | | ROC | 2 | | | |
| 37 | Ø | LSI | + Ø | TFR | | |
| 38 | 1 | ASI | + Ø | | W | 2 |
| 39 | 2 | ASI | + Ø | | | |
| 4Ø | | RFQ | | | | |
| 41 | | ROC | 2 | | | |
| 42 | | ROC | 2 | | | |
| 43 | | ROC | 2 | | | |
| 44 | | ROC | 2 | | | |
| 45 | | ROC | 2 | | | |
| 46 | | ROC | 2 | | | |
| 47 | | | | TFR | | |
| 48 | | | | | W | Ø |

FIG.8